# EUROPEAN PATENT SPECIFICATION

(11) **EP 3 546 248 B1**
(45) Date of publication and mention of the grant of the patent: **02.07.2025**
(21) Application number: 19165306.2
(22) Date of filing: 26.03.2019
(51) Int. Cl.: B60C 9/20, B60C 9/22, B60C 1/00

(54) **TIRE**
REIFEN
PNEUMATIQUE

(30) Priority: 30.03.2018 JP 2018069806
(43) Date of publication of application: 02.10.2019
(73) Proprietor: Sumitomo Rubber Industries, Ltd., Kobe-shi, Hyogo-ken 651-0072 (JP)
(72) Inventor: OKABE, Noboru, Kobe-shi, Hyogo, 651-0072 (JP); SUZUKI, Masumi, Kobe-shi, Hyogo, 651-0072 (JP); FUJISAWA, Koji, Kobe-shi, Hyogo, 651-0072 (JP)
(74) Representative: Manitz Finsterwald Patent- und Rechtsanwaltspartnerschaft mbB

(56) References cited:
- EP-A2- 1 167 082
- EP-A2- 1 876 203
- JP-A- 2008 279 841
- US-A1- 2015 007 922
- US-A1- 2018 022 159
- US-A1- 2018 022 160

## Description

### CROSS REFERENCE TO RELATED APPLICATION

This application claims priority on Patent Application No. 2018-069806 filed in JAPAN on March 30, 2018.

### BACKGROUND OF THE INVENTION

### 1. Field of the Invention

The present invention relates to tires.

### 2. Description of the Related Art

A tire comes into contact with a road surface at a tread thereof. In a running state of a vehicle, sound generated by vibration from the road surface, that is, road noise, is transmitted through a tire and a suspension to a vehicle body. From the viewpoint of silence of the vehicle, reduction of the road noise is desired.

Generally, a radial tire for a passenger car includes, at the outer side of a belt, a band in which a band cord is helically wound. The band cord serves to hold the belt and inhibit lifting of the belt caused by centrifugal force during running at a high speed. JP2003-237309A discloses a tire in which a polyethylene-2,6-naphthalate fiber cord for which a cord thickness, the number of twists, an initial modulus, a rate of change in the initial modulus in a temperature range of 25°C to 70°C, etc., are specified is used as a band cord, whereby the tire more effectively exhibits a road noise reduction effect while ensuring desired durability. US 2015/0007922 A1, US 2018/0022159 A1 and EP 1 167 082 A2 disclose laminates of three superimposed, reinforced rubber layers arranged between the tread and the carcass of a tire, the radially outermost layer consisting of a rubber material combined with twisted polyester fiber assemblies, while the radially inner layers consist of rubber materials combined with steel monofilaments. US 2018/0022160 A1 discloses a laminate of three superimposed, reinforced rubber layers arranged between the tread and the carcass of a tire, the radially inner layers consisting of rubber materials combined with steel cords, and the radially outermost layer consisting of a rubber material combined with textile monofilaments. EP 1 876 203 A2 discloses a rubber composition comprising 40 to 80% by weight of a natural rubber and/or isoprene rubber and 10 to 30% by weight of a modified butadiene rubber, wherein the rubber composition is coated on fiber cords used to form belts for tires. Attention is also drawn to the disclosure of the document JP 2008279841 A.

### SUMMARY OF THE INVENTION

However, both a sufficient road noise reduction effect and excellent low fuel consumption performance cannot be exhibited. In particular, in the case of achieving low fuel consumption by reducing the weight of a tire, it is conceivable to reduce the gauge between respective cords as much as possible, but noise is increased in the actual situation. Under such circumstances, an object of the present invention is to provide a tire having an excellent road noise reduction effect and excellent low fuel consumption performance.

The present invention is directed to a tire including a band and a belt, wherein the band is layered outward of the belt in a radial direction of the tire, the belt includes two or more layers layered in the radial direction of the tire, the band includes a rubber composition and a polyester cord, each of the two or more layers of the belt includes a rubber composition and a cord, and a gauge between the cords of two adjacent layers is not greater than 0.40 mm.

In the tire, the rubber composition of the band may contain a rubber component, and an amount of a polyisoprene-based rubber in 100% by weight of the rubber component may be 30 to 100% by weight.

In the tire, the rubber composition of the belt may contain a rubber component, and an amount of a polyisoprene-based rubber in 100% by weight of the rubber component may be 30 to 100% by weight.

According to the present invention, it is possible to provide a tire having an excellent road noise reduction effect and excellent low fuel consumption performance.

### BRIEF DESCRIPTION OF THE DRAWINGS

FIG. 1 is a diagram showing an example of an embodiment of a tire;
FIG. 2 is a diagram showing an example of an embodiment of a jointless band; and
FIG. 3 is a diagram showing an example of a cross-section of a sample cut out from the tire.

### DESCRIPTION OF THE PREFERRED EMBODIMENTS

### [Tire]

The following will specifically describe one example of a preferred embodiment of the present invention. The tire according to the present invention is a tire, as defined in claim 1, including a band and a belt, wherein the band is layered outward of the belt in a radial direction of the tire, the belt includes two or more layers layered in the radial direction of the tire, the band includes a rubber composition and a polyester cord formed by twisting a plurality of filament yarns, each of the two or more layers of the belt includes a rubber composition and a cord, and a gauge between the cords of two adjacent layers is 0.20 mm or greater and not greater than 0.40 mm.

The tire according to the present invention includes a band and a belt. The band is a member that is provided outward of the belt in the radial direction of the tire in order to inhibit lifting of the belt from a carcass due to centrifugal force generated by rotation of the tire during running of a vehicle. The band may be layered at the outer side in the radial direction of the tire. In addition, the band may be a jointless band having a so-called jointless structure.

Next, the belt is a member that is disposed within a tread of the tire and outward of the carcass in the radial direction. The belt includes two or more layers layered in the radial direction, may include three or more layers, and may include, for example, two, three, or four layers.

The carcass or a carcass ply is a member that is disposed within the tread of the tire and outward of an inner liner in the radial direction. Here, in particular, a member composed of one carcass ply or two or more carcass plies is referred to as a carcass. The inner liner is a member that is formed so as to form a tire inner surface. Owing to this member, an amount of air permeation can be reduced, and the internal pressure of the tire can be maintained.

### [Band]

The band included in the tire according to the present invention is layered outward of the belt in the radial direction of the tire and includes a rubber composition and a polyester cord. In addition, the band may be a polyester cord-rubber composition complex obtained by combining a rubber composition and a polyester cord.

### (Rubber Composition)

The rubber composition of the band included in the tire according to the present invention is not particularly limited as long as the rubber composition contains a rubber component.

Examples of the rubber component include: conjugated diene polymers such as polyisoprene-based rubbers, butadiene rubber (BR), styrene-butadiene rubber (SBR), styreneisoprene-butadiene rubber (SIBR), chloroprene rubber (CR), acrylonitrile-butadiene rubber (NBR), and the like; and non-diene polymers such as ethylene-propylene rubber (EPDM), isobutylene-isoprene rubber (IIR), halogenated isobutylene-isoprene rubber (X-IIR), and the like. Various rubber components may be individually used, or two or more of these rubber components may be used in combination. Among them, SBR or BR is preferably contained since they have excellent reversion resistance, heat resistance, and crack growth resistance, and SBR is more preferably contained since it has particularly excellent processability.

Examples of polyisoprene-based rubbers include isoprene rubber (IR), natural rubber (NR), reformed natural rubber, and the like. Examples of NR include deproteinized natural rubber (DPNR) and high pure natural rubber (HPNR), and examples of reformed natural rubber include epoxidized natural rubber (ENR), hydrogenated natural rubber (HNR), grafted natural rubber, and the like. In addition, as NR, NRs that are generally used in the tire industry, such as SIR20, RSS#3, TSR20, and the like, can be used. Among them, NR and IR are preferable, and NR is more preferable since it has excellent elongation at break and breaking strength.

Butadiene rubber (BR) is not particularly limited. As BR, BRs that are generally used in the tire industry, including BR having a high cis content such as BR1220 manufactured by Zeon Corporation and BR150B manufactured by Ube Industries, Ltd. and the like, BR containing 1,2-syndiotactic polybutadiene crystal (SPB) such as VCR412 and VCR617 manufactured by Ube Industries, Ltd. and the like, and BR synthesized by using an Nd catalyst such as BUNA CB 25 and BUNA CB 24 manufactured by LANXESS, and the like, can be used. In addition, tin-modified butadiene rubber (tin-modified BR) modified with a tin compound may also be used.

Styrene-butadiene rubber (SBR) is not particularly limited, and examples thereof include emulsion-polymerized styrene-butadiene rubber (E-SBR), solution-polymerized styrene-butadiene rubber (S-SBR), and modified SBR modified with 3-aminopropyldimethylmethoxysilane and the like, and the like. Among them, E-SBR is preferable for the reason that it contains a large amount of a high-molecular-weight polymer component and has excellent elongation at break.

The amount of a conjugated diene polymer in 100% by weight of the rubber component is preferably not less than 10% by weight, more preferably not less than 30% by weight, further preferably not less than 50% by weight, and most preferably not less than 80% by weight, and the upper limit of the amount is not particularly limited. This is because, when the amount is within this range, mechanical strength, reversion resistance, heat resistance, and crack growth resistance are excellent.

The amount of a polyisoprene-based rubber in 100% by weight of the rubber component is preferably not less than 30% by weight and more preferably not less than 50% by weight. This is because, when the amount is within these ranges, adhesiveness to the polyester cord and breaking strength can be enhanced. In addition, the amount of the polyisoprene-based rubber may be 100% by weight or less, 90% by weight or less, and 70% by weight or less.

As the rubber component, a conjugated diene polymer is preferably contained, but the amount of the conjugated diene polymer in 100% by weight of the rubber component is not particularly limited. The amount of the polyisoprene-based rubber in 100% by weight of the rubber component is preferably 30 to 100% by weight. The purpose for this is to ensure desired adhesiveness to the polyester cord.

### (Optional Components of Rubber Composition)

As long as achievement of the object and the advantageous effects of the present invention is not disturbed, for example, a strength improving agent such as sulfur, carbon black, silica, and the like; a reinforcing filler such as clay and the like; a silane coupling agent; stearic acid; zinc oxide; various antioxidants; oil such as aroma oil and the like; wax; a vulcanization accelerator; a vulcanization accelerator aid; and the like may be blended as appropriate in the rubber composition as ingredients that are generally used for production of a rubber composition.

In the case of blending sulfur in the rubber composition, the amount of the sulfur in the rubber composition per 100 parts by weight of the rubber component is preferably not less than 1.5 parts by weight and more preferably not less than 2.0 parts by weight. If the amount is less than 1.5 parts by weight, the adhesiveness to the polyester cord is decreased, so that peeling is likely to occur between the polyester cord and the rubber. Furthermore, the complex elastic modulus and the elongation at break of the rubber composition are also decreased, so that the durability of the rubber composition tends to be decreased. Moreover, the low fuel consumption performance of an automobile or the like is also deteriorated. The amount of the sulfur is preferably not greater than 3.1 parts by weight and more preferably not greater than 2.5 parts by weight. If the amount exceeds 3.1 parts by weight, the crosslink density of the rubber composition is increased due to oxidation degradation of the rubber composition, and the elongation at break of the rubber composition is decreased, so that the durability of the rubber composition tends to be decreased.

By blending carbon black in the rubber composition, more preferable reinforcement is ensured, and the complex elastic modulus, the low heat generation properties, the elongation at break, and the durability of the rubber composition can be improved in a balanced manner.

The nitrogen adsorption specific surface area (N₂SA) of the carbon black is preferably not less than 38 m²/g, more preferably not less than 60 m²/g, and further preferably not less than 90 m²/g. If the N₂SA of the carbon black is less than 38 m²/g, sufficient reinforcement is not ensured, so that the hardness and the elongation at break (when the tire is new, after thermal oxidation degradation) tend to be decreased. The N₂SA of the carbon black is preferably not greater than 125 m²/g and more preferably not greater than 115 m²/g. If the N₂SA of the carbon black exceeds 125 m²/g, low fuel consumption performance and processability (sheet rollability) tend to be decreased. The nitrogen adsorption specific surface area of the carbon black is a value measured by Method A on page 7 of JIS K6217.

The amount of the carbon black per 100 parts by weight of the rubber component is preferably not less than 10 parts by weight and more preferably not less than 20 parts by weight. If the amount of the carbon black is less than 10 parts by weight, the rubber composition does not ensure sufficient reinforcement, so that the complex elastic modulus thereof tends to be decreased. In addition, sufficient elongation at break is not exhibited, so that the durability tends to be decreased. The amount of the carbon black is preferably not greater than 55 parts by weight and more preferably not greater than 50 parts by weight. If the amount of the carbon black exceeds 55 parts by weight, the low heat generation properties, the elongation at break, the processability (sheet rollability), and the durability of the rubber composition tend to be decreased.

By blending silica in the rubber composition, the elongation at break of the rubber composition and the adhesiveness of the rubber composition to the polyester cord can be improved.

The silica is not particularly limited, and examples of the silica include dry-process silica (silicic anhydride), wet-process silica (hydrous silicic acid), and the like. Wet-process silica is preferable since it has a higher silanol group content.

The nitrogen adsorption specific surface area (N₂SA) of the silica is preferably not less than 80 m²/g, more preferably not less than 100 m²/g, and further preferably not less than 110 m²/g. If the N₂SA of the silica is less than 80 m²/g, the elongation at break is decreased, so that the durability tends to be decreased. The N₂SA of the silica is preferably not greater than 250 m²/g, more preferably not greater than 235 m²/g, and further preferably not greater than 220 m²/g. If the N₂SA of the silica exceeds 250 m²/g, the low fuel consumption performance and the processability (sheet rollability) tend to be decreased. The nitrogen adsorption specific surface area of the silica is a value measured by the BET method according to ASTM D3037-81.

In the case of containing the silica, the amount of the silica per 100 parts by weight of the rubber component is preferably not less than 5 parts by weight and more preferably not less than 7 parts by weight. If the amount of the silica is less than 5 parts by weight, the elongation at break is decreased, so that the durability tends to be decreased. In addition, the low fuel consumption performance also tends to be deteriorated. The amount of the silica is preferably not greater than 17 parts by weight, more preferably not greater than 15 parts by weight, and further preferably not greater than 13 parts by weight. If the amount of the silica exceeds 17 parts by weight, the dispersibility of the silica is decreased, so that a complex elastic modulus E* tends to be decreased. In addition, during heating at the time of rolling or during storage after rolling, the silica re-aggregates, so that the processability tends to be decreased.

### (Polyester Cord)

The band included in the tire according to the present invention includes a polyester cord. Polyester, which is the material of the polyester cord, has a higher modulus than nylon. Since the polyester cord is used in the band, movement (or vibration) of the tread is inhibited when centrifugal force is applied to the tire due to running of the vehicle, and an excellent noise reduction effect is exhibited.

Thus, the tire according to the present invention does not increase noise and exhibits an excellent noise reduction effect, even in the case where the gauge between the cords of two adjacent layers in the belt is decreased to be not greater than 0.40 mm and the weight of the belt is reduced, resulting in improvement of low fuel consumption performance.

Examples of types of the polyester cord included in the band provided in the tire according to the present invention include a polyethylene terephthalate (PET) cord, a polyethylene naphthalate (PEN) cord, and the like. In addition, a hybrid cord of polyester and a cord formed from another organic fiber, such as a polyester-nylon hybrid cord in which a part of the polyester cord is replaced with a cord formed from another organic fiber such as nylon and the like, and the like, may be used.

The cord is formed by twisting a plurality of filament yarns.

As the polyester cord, for example, i) a cord obtained by firstly twisting together two multifilaments having 1100 dtex 48 times/10 cm to obtain two cords (in other words, 1100/2 dtex) and then secondly twisting together the two firstly twisted cords the same number of times in a direction opposite to that of the first twisting (intermediate elongation when a constant load of 44 N is applied: 4.30%), or ii) a cord obtained by firstly twisting together two multifilaments having 1670 dtex 40 times/10 cm to obtain two cords (in other words, 1670/2 dtex) and then secondly twisting together the two firstly twisted cords the same number of times in a direction opposite to that of the first twisting (intermediate elongation when a constant load of 66 N is applied: 4.30%), can be used. The intermediate elongation can be obtained according to the test method for "rate of elongation at constant load" in JIS L1017.

As a cord formed from a polyester fiber and a nylon fiber (polyester-nylon hybrid cord), for example, a cord obtained by firstly twisting together a polyester multifilament having 1440 dtex and a nylon multifilament having 1400 dtex 30-38 times/10 cm to obtain two cords (in other words, 1440-P/1400-N dtex) and then secondly twisting together the two firstly twisted cords the same number of times in a direction opposite to that of the first twisting (intermediate elongation when a constant load of 44 N is applied: 4.40%, intermediate elongation when a constant load of 66 N is applied: 6.30%), can be used.

### [Belt]

The belt included in the tire according to the present invention includes two or more layers layered in the radial direction of the tire. In addition, each of the two or more layers of the belt includes a rubber composition and a cord, and a gauge between the cords of two adjacent layers is not greater than 0.40 mm. Moreover, each layer of the belt may be a cord-rubber composition complex obtained by combining a rubber composition and a cord.

### (Rubber Composition)

The rubber composition of the belt included in the tire according to the present invention is not particularly limited as long as the rubber composition contains a rubber component.

As the rubber component contained in the belt, any component described above as being adopted as the rubber component contained in the band may be adopted.

The amount of a conjugated diene polymer in 100% by weight of the rubber component is preferably not less than 10% by weight, more preferably not less than 30% by weight, much more preferably not less than 50% by weight, and further preferably not less than 80% by weight, and the upper limit of the amount is not particularly limited. This is because, when the amount is within this range, favorable adhesion to the belt cord is achieved.

The amount of a polyisoprene-based rubber in 100% by weight of the rubber component is preferably not less than 30% by weight and more preferably not less than 50% by weight. This is because, when the amount is within this range, the adhesiveness to the polyester cord and the breaking strength can be enhanced. The amount of the polyisoprene-based rubber may be 100% by weight or less, 90% by weight or less, and 70% by weight or less.

As the rubber component, a conjugated diene polymer is preferably contained, but the amount of the conjugated diene polymer in 100% by weight of the rubber component is not particularly limited. The amount of the polyisoprene-based rubber in 100% by weight of the rubber component is preferably 30 to 100% by weight. This is because mechanical strength, reversion resistance, heat resistance, and crack growth resistance are excellent.

### (Cords)

Examples of types of the cords included in the belt include a steel cord and a cord formed from an organic fiber.

The steel cord is preferably a cord the surface of which is plated with brass, Zn, or the like in order to improve the adhesiveness to the rubber composition.

Examples of the cord formed from an organic fiber include: polyester cords such as a polyethylene terephthalate (PET) cord, a polyethylene naphthalate (PEN) cord, and the like; a nylon cord; a rayon cord; a vinylon cord; an aramid cord; a polyurethane cord; and the like.

The gauge between the cords of two adjacent layers in the belt of the tire according to the present invention is not greater than 0.40 mm. The gauge is preferably not greater than 0.38 mm, more preferably not greater than 0.35 mm, and further preferably not greater than 0.30 mm. This is because a rolling resistance can be further reduced and low fuel consumption performance can be further improved. The gauge is 0.20 mm or greater. If the gauge is less than 0.20 mm, there is a possibility that, during running of the vehicle, the cords of two adjacent layers come into contact with each other, resulting in a reduction in durability of the tire.

The gauge between the cords of two adjacent layers among the two or more layers of the belt can be measured as follows. A sample having an arbitrary length in the circumferential direction of the tire (longitudinal direction) and an arbitrary length in a direction perpendicular to the circumferential direction is cut out from the tire. Using an image of a cross-section of the cut-out sample taken by an optical microscope, a tangent line A is drawn as a straight line connecting outer end portions of the respective cords aligned within a layer at the inner side in the radial direction of the tire in the belt, and a tangent line B is drawn as a straight line connecting inner end portions of the respective cords aligned within a layer at the outer side in the radial direction of the tire in the belt. The distance between the tangent line A and the tangent line B is regarded as the gauge between the cords of the two adjacent layers among the two or more layers of the belt.

### [Production of Tire]

The tire according to the present invention can be produced by an ordinary method using the above rubber composition and other materials. The rubber composition is extruded in an uncrosslinked state and molded in accordance with the shapes of members such as a band, a belt, and the like. Regarding members requiring cords such as the band, the belt, and the like, a predetermined cord is interposed in the molded uncrosslinked rubber composition for each member to obtain each member in which the rubber composition is in an uncrosslinked state. Next, the respective members are attached together to form an uncrosslinked tire. Then, the uncrosslinked tire is heated and pressed, whereby a tire can be produced.

A step of interposing the predetermined cords in the molded uncrosslinked rubber composition for each member will be described. Regarding the band, preferably, a polyester cord is treated with an adhesive in advance and then adhered to the rubber composition. As the adhesive to be used for adhesion between the polyester cord and the rubber composition, for example, an epoxy compound such as EX-313 (glycerin polyglycidyl ether, manufactured by Nagase ChemteX Corporation), RFL (resorcinol-formalin-latex), and the like can be used. Regarding the belt, preferably, cords, in particular, steel cords, are treated with an adhesive in advance and then adhered to the rubber composition. As the adhesive to be used for adhesion between the steel cords and the rubber composition, for example, a mixed plating of copper and zinc, or the like can be used. In the case of using cords formed from an organic fiber as the cords included in the belt, for example, an epoxy compound such as EX-313 (glycerin polyglycidyl ether, manufactured by Nagase ChemteX Corporation), RFL (resorcinol-formalin-latex), and the like can be used as an adhesive.

### [Embodiment]

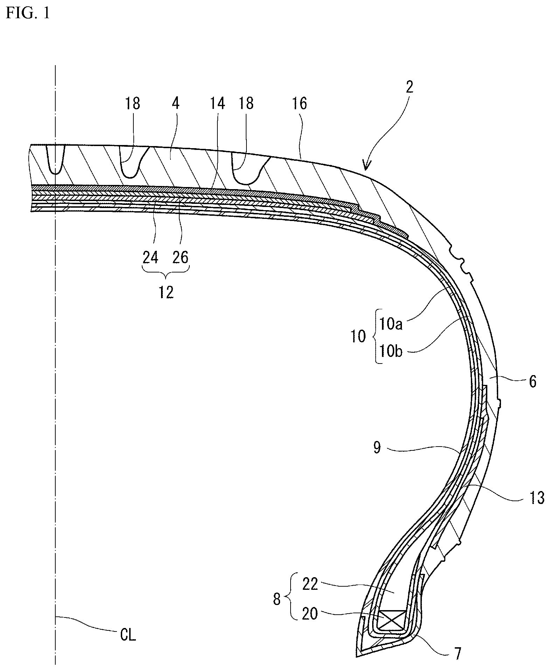

One example of an embodiment of the tire according to the present invention will be described in detail with reference to the drawings. FIG. 1 shows a pneumatic tire 2. In FIG. 1, the up-down direction is the radial direction of the tire 2, the right-left direction is the rotation axis direction of the tire 2, and the direction perpendicular to the surface of the sheet is the circumferential direction of the tire 2. In FIG. 1, an alternate long and short dash line CL represents the equator plane of the tire 2. The shape of the tire 2 is symmetrical about the equator plane CL except for a tread pattern.

The tire 2 includes a tread 4, a pair of sidewalls 6, a pair of chafers 7, a pair of beads 8, an inner liner 9, a carcass 10, a belt 12, a pair of fillers 13, and a jointless band 14. The tire 2 is of a tubeless type. The tire 2 is mounted to a passenger car.

The tread 4 has a shape projecting outward in the radial direction. The tread 4 forms a tread surface 16 that is brought into contact with a road surface. Grooves 18 are formed on the tread 4. The tread pattern is formed by the grooves 18. The tread 4 is formed from a crosslinked rubber that has excellent wear resistance and grip performance.

Each sidewall 6 extends from the edge of the tread 4 substantially inward in the radial direction. The radially outer edge of the sidewall 6 is joined to the tread 4. The sidewall 6 is formed from a crosslinked rubber that has excellent cut resistance and weather resistance.

Each chafer 7 is located near the bead 8. When the tire 2 is mounted to a rim (which is a part of a wheel and is a portion with which a tire is to be combined and which is not shown), the chafer 7 is brought into contact with the rim. Because of this contact, the vicinity of the bead 8 is protected. For example, a carcass ply 10a, a carcass ply 10b, or the carcass 10 within the tire is protected from friction against the rim.

The form of an organic fiber used for the chafer 7 is a cord. The chafer 7 is formed by treating cords with an adhesive and adhering the cords to a rubber composition. Examples of preferable organic fibers include: polyester fibers such as polyethylene terephthalate (PET) fibers, polyethylene naphthalate (PEN) fibers, and the like; nylon fibers; rayon fibers; and aramid fibers.

Each bead 8 is located inward of the sidewall 6 in the axial direction. The bead 8 has a core 20 and an apex 22 extending from the core 20 outward in the radial direction. The core 20 has a ring shape and includes a wound non-stretchable wire. A typical material of the wire is steel. The apex 22 is tapered outward in the radial direction. The apex 22 is formed from a highly hard crosslinked rubber.

The inner liner 9 is formed so as to form a tire inner surface. The inner liner 9 is formed from a crosslinked rubber that inhibits air permeation.

The carcass 10 includes two plies, that is, the carcass ply 10a and the carcass ply 10b. The carcass ply 10a and the carcass ply 10b extend on and between the beads 8 at both sides along the tread 4 and the sidewalls 6. The carcass ply 10a and the carcass ply 10b are turned up around each core 20 from the inner side toward the outer side in the axial direction. Each of the carcass ply 10a and the carcass ply 10b includes multiple cords aligned with each other in the circumferential direction, and a topping rubber. The absolute value of the angle of each cord relative to the equator plane CL is 75° to 90°. In other words, the carcass ply 10a and the carcass ply 10b each have a radial structure. In addition, the carcass 10 may be formed from one carcass ply or three or more carcass plies other than two carcass plies.

The form of an organic fiber used for the carcass ply 10a and the carcass ply 10b is a cord. The carcass ply 10a and the carcass ply 10b are each formed by treating cords with an adhesive and adhering the cords to a rubber composition. Examples of preferable organic fibers include: polyester fibers such as polyethylene terephthalate (PET) fibers, polyethylene naphthalate (PEN) fibers, and the like; nylon fibers; rayon fibers; and aramid fibers.

The belt 12 is located inward of the tread 4 in the radial direction. The belt 12 is layered over the carcass 10. The belt 12 reinforces the carcass 10. The belt 12 includes an inner layer 24 and an outer layer 26. As is obvious from FIG. 1, in the axial direction, the width of the inner layer 24 is slightly larger than that of the outer layer 26. Although not shown in FIG. 1, each of the inner layer 24 and the outer layer 26 includes multiple cords aligned with each other, and a topping rubber. Each cord is tilted relative to the equator plane CL. The absolute value of a tilt angle is generally not less than 10° and not greater than 35°. The direction in which the cords of the inner layer 24 are titled relative to the equator plane CL is opposite to the direction in which the cords of the outer layer 26 are tilted relative to the equator plane CL. As the cords, steel cords and cords formed from an organic fiber can be used.

Each filler 13 is disposed at the bead portion of the tire and enhances the stiffness of the bead portion. Each filler includes multiple cords aligned with each other, and a topping rubber.

The form of an organic fiber used for the filler 13 is a cord. The filler 13 is formed by treating cords with an adhesive for an organic fiber and adhering the cords to a rubber composition. Examples of preferable organic fibers include: polyester fibers such as polyethylene terephthalate (PET) fibers, polyethylene naphthalate (PEN) fibers, and the like; nylon fibers; rayon fibers; and aramid fibers.

The jointless band 14 is located outward of the belt 12 in the radial direction. In the axial direction, the width of the jointless band 14 is larger than that of the belt 12. The jointless band 14 reinforces the belt 12.

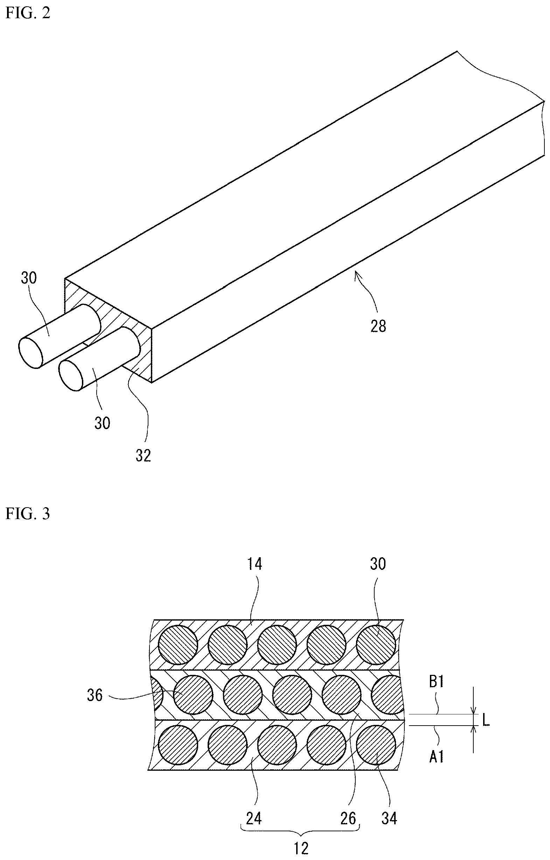

FIG. 2 shows a ribbon 28 forming the jointless band 14. The ribbon 28 has two polyester cords 30 and a topping rubber 32. The ribbon 28 is formed by treating the polyester cords 30 with an adhesive and adhering the polyester cords 30 to the topping rubber 32. The jointless band 14 is formed by helically winding the ribbon 28 in the circumferential direction. The jointless band 14 has a so-called jointless structure. Each cord 30 extends substantially in the circumferential direction. The angle of the cord 30 relative to the circumferential direction is preferably not greater than 5° and particularly preferably not greater than 2°. The belt 12 is held by the polyester cords 30, and thus lifting of the belt 12 is inhibited. The number of polyester cords 30 in the ribbon 28 may be one or may be three or more.

Each polyester cord 30 is formed by twisting a plurality of polyester fibers. The tire including the polyester cord 30 has excellent heat resistance and durability. Examples of preferable polyester fibers for forming the polyester cord 30 include polyethylene terephthalate (PET) fibers, polyethylene naphthalate (PEN) fibers, and the like.

FIG. 3 is a diagram showing an example of a cross-section of a sample cut out with an arbitrary length in the circumferential direction of the pneumatic tire 2 shown in FIG. 1 (longitudinal direction) and an arbitrary length in a direction perpendicular to the circumferential direction, and shows the jointless band 14 and the inner layer 24 and the outer layer 26 of the belt 12. The inner layer 24 and the outer layer 26 of the belt 12 include steel cords 34 and steel cords 36, respectively.

FIG. 3 also shows a gauge L between the steel cords 34 of the inner layer 24 and the steel cords 36 of the outer layer 26 in the belt 12. A tangent line A1 is a straight line connecting radially outer end portions of the respective steel cords 34 aligned in the inner layer 24 in the belt 12. A tangent line B1 is a straight line connecting radially inner end portions of the respective steel cords 36 aligned in the outer layer 26 in the belt 12. The distance between the tangent line A1 and the tangent line B1 is the gauge L between the steel cords 34 and the steel cords 36 of the belt 12.

### EXAMPLES

The present invention will be described in more detail by means of examples below. However, the present invention is not limited to these examples.

Each evaluation for examples and comparative examples was performed by the following method.

### <Gauge between Cords of Two adjacent Layers in Belt>

The gauge between the cords of two adjacent layers among two or more layers of a belt was measured as follows. A tire was cut in a direction perpendicular to the circumferential direction thereof, and an image of a cross-section thereof was taken by an optical microscope equipped with a camera. On the taken image, a tangent line A was drawn as a straight line connecting outer end portions of the respective cords aligned within a layer inward in the radial direction of the tire in the belt, and a tangent line B was drawn as a straight line connecting inner end portions of the respective cords aligned within a layer outward in the radial direction of the tire in the belt. The distance between the tangent line A and the tangent line B was regarded as the gauge between the cords of the two adjacent layers among the two or more layers of the belt.

### <Road Noise>

Four tires that are the same were prepared and mounted to a rim of 15×6.0J, were set such that the internal pressure thereof was 230 kPa, and were attached to a vehicle having an engine displacement of 1800 cc. Two persons got into the vehicle, and the vehicle ran at a speed of 80 km/h. The noise within the vehicle at that time was measured, with a microphone at a right ear position of the driver seat, as sound pressure levels (db(A)) at 160 Hz and 315 Hz obtained through 1/3 octave analysis. The result is shown as a relative value (index) with the sound pressure level of Comparative Example 1 being set as 100 (dB(A)).

### <Rolling Resistance>

A rolling resistance (N) was measured using a rolling resistance testing machine under the following measurement conditions. The result is shown as a relative value (index) with the rolling resistance of Comparative Example 1 being set as 100 (N). A lower value indicates that the rolling resistance is lower and low fuel consumption performance is better.
Used rim: 15×6.0J
Internal pressure: 210 kPa
Load: 4.82 kN
Speed: 80 km/h

### (Example 1)

First, a band in which a rubber composition was in an uncrosslinked state was formed through the following procedure.

An adhesive composition was prepared as a first treatment agent by adding 11.8 g of ETC-N615 (sorbitol polyglycidyl ether, chlorine content: 9.3% by weight, epoxy equivalent: 163, manufactured by Nagase ChemteX Corporation) as an epoxy compound to 920 g of water while stirring the water, and adding 72.1 g of an ε-caprolactam blocked diphenylmethane diisocyanate aqueous dispersion (54% concentration) as a blocked isocyanate thereto.

An RFL liquid was prepared as a rubber latex by diluting 172 g of Nipol 2518FS (manufactured by Zeon Corporation, a vinylpyridine-styrene-butadiene terpolymer aqueous emulsified liquid, total solid content concentration: 40.5%) and 73 g of Nipol LX-112 (manufactured by Zeon Corporation, a styrene-butadiene copolymer 41% aqueous emulsified liquid, total solid content concentration: 40.5%) with 76 g of water, and adding 270 g of a resorcin-formaldehyde initial condensation dispersion liquid (the mole ratio of resorcin to formaldehyde was 1:1.5, total solid content concentration: 6.5%) as resorcin and formaldehyde into the diluted solution while slowly stirring the diluted solution. The obtained RFL liquid was diluted with 591 g of water to obtain a second treatment agent (total solid content concentration: 10%).

A polyester (polyethylene terephthalate (PET)) cord (configuration of cord: 1100/2 (dtex), number of twists of cord: 26 (times/10 cm), cord diameter: 0.54 mm, ends: 49 cords/5 cm) was immersed as a polyester cord into the first treatment agent, then dried at 150°C for 130 seconds, and subsequently thermally treated at 240°C for 130 seconds. Next, the polyester cord was immersed into the second treatment agent, then dried at 150°C for 130 seconds, and subsequently thermally treated at 240°C for 70 seconds.

The organic fiber treated through the above procedure was embedded into an uncrosslinked rubber containing natural rubber as a main component, thereby forming a band in which a rubber composition was in an uncrosslinked state.

The composition of the uncrosslinked rubber containing natural rubber as a main component is as follows.
TSR20 (TSR is the abbreviation for Technically Specified Rubber): 60 parts by weight, as natural rubber
SBR 1502: 40 parts by weight, as styrene-butadiene rubber
"Seast 300" (manufactured by Tokai Carbon Co., Ltd.): 40 parts by weight, as a reinforcing material
Mineral oil: 2 parts by weight, as a softener
"ROBO RD" (manufactured by Ouchi Shinko Chemical Industrial Co., Ltd.): 1 part by weight, as an antioxidant
Stearic acid: 3 parts by weight
Zinc oxide: 3 parts by weight
Powdery sulfur (manufactured by Tsurumi Chemical Industry Co., Ltd.): 4 parts by weight
"Nocceler NS" (manufactured by Ouchi Shinko Chemical Industrial Co., Ltd.: N-tert-butyl-2-benzothiazolylsulfenamide): 0.9 parts by weight, as an accelerator

Next, a belt in which a rubber composition was in an uncrosslinked state was formed through a general procedure in the tire industry. However, in order to decrease the thickness of a rubber covering the belt, the thickness of a sheet was adjusted to a small thickness by narrowing the intervals between rolls for processing a rubber, which was to be attached to cords, into a sheet shape.

The amount of the rubber to be attached to the cords and an expansion rate of a raw cover during molding and vulcanization were adjusted such that the gauge between the cords of two adjacent layers in an obtained tire was 0.38 mm.

Furthermore, the band in which the rubber composition was in an uncrosslinked state and the belt in which the rubber composition was in an uncrosslinked state (at least two layers) were attached together with other tire members to form an uncrosslinked tire. Then, crosslinking reaction was caused to proceed by pressing the uncrosslinked tire against a mold heated to 170°C under a pressure of 240 kPa for 10 minutes, whereby a tire was produced. The obtained tire was evaluated for the gauge between the cords of two adjacent layers in the belt, road noise, and rolling resistance. The results are shown in Table 1.

### (Comparative Example 1)

A tire was produced in the same manner as Example 1, except: a nylon 66 cord (configuration of cord: 940/2 (dtex), number of twists of cord: 31 (times/10 cm), cord diameter: 0.55 mm, ends: 45 cords/5 cm) was used instead of the polyester cord; the nylon 66 cord was treated using the RFL liquid; and the amount of a rubber to be attached to cords and an expansion rate of a raw cover during molding and vulcanization were adjusted such that the gauge between the cords of two adjacent layers in an obtained tire was 0.43 mm. The obtained tire was evaluated for the gauge between the cords of two adjacent layers in the belt, road noise, and rolling resistance. The results are shown in Table 1.

### (Example 2)

A tire was produced in the same manner as Example 1, except the amount of a rubber to be attached to cords and an expansion rate of a raw cover during molding and vulcanization were adjusted such that the gauge between the cords of two adjacent layers in an obtained tire was 0.35 mm. The obtained tire was evaluated for the gauge between the cords of two adjacent layers in the belt, road noise, and rolling resistance. The results are shown in Table 1.

### (Comparative Example 2)

A tire was produced in the same manner as Example 1, except the amount of a rubber to be attached to cords and an expansion rate of a raw cover during molding and vulcanization were adjusted such that the gauge between the cords of two adjacent layers in an obtained tire was 0.43 mm. The obtained tire was evaluated for the gauge between the cords of two adjacent layers in the belt, road noise, and rolling resistance. The results are shown in Table 1.

### (Comparative Example 3)

A tire was produced in the same manner as Example 1, except a nylon 66 cord (configuration of cord: 940/2 (dtex), number of twists of cord: 31 (times/10 cm), cord diameter: 0.55 mm, ends: 45 cords/5 cm) was used instead of the polyester cord and the nylon 66 cord was treated using the RFL liquid. The obtained tire was evaluated for the gauge between the cords of two adjacent layers in the belt, road noise, and rolling resistance. The results are shown in Table 1.

**[Table 1]**

| | | Ex. 1 | Comp. Ex. 1 | Ex. 2 | Comp. Ex. 2 | Comp. Ex.3 |
|---|---|---|---|---|---|---|
| Band | Material of cord | PET | Nylon 66 | PET | PET | Nylon 66 |
| | Configuration of cord | 1100 dtex/2 | 940 dtex/2 | 1100 dtex/2 | 1100 dtex/2 | 940 dtex/2 |
| Belt | Gauge between cords (mm) | 0.38 | 0.43 | 0.35 | 0.43 | 0.38 |
| Tire performance | Road noise 160 Hz (index) | 92 | 100 | 95 | 94 | 108 |
| | Road noise 315 Hz (index) | 88 | 100 | 92 | 89 | 113 |
| | Rolling resistance (index) | 92 | 100 | 82 | 103 | 93 |

As shown in Comparative Examples 1 to 3, the tires in which a polyester cord is not used or the gauge between the cords of two adjacent layers in the belt exceeds 0.40 mm have a high road noise or rolling resistance value and have an inferior road noise reduction effect or low fuel consumption performance. On the other hand, as shown in Examples 1 and 2, the tires in which a polyester cord is used and the gauge between the cords of two adjacent layers in the belt is not greater than 0.40 mm have an excellent road noise reduction effect and excellent low fuel consumption performance.

## Claims

1. A tire (2) comprising a band (14) and a belt (12), wherein
the band (14) is layered outward of the belt (12) in a radial direction of the tire (2),
the belt (12) includes two or more layers (24, 26) layered in the radial direction of the tire,
the band (14) includes a rubber composition and a polyester cord (30) formed by twisting a plurality of filament yarns,
each of the two or more layers (24, 26) of the belt (12) includes a rubber composition and a cord (34, 36), **characterised in that**
a gauge (L) between the cords (34, 36) of two adjacent layers (24, 26) in the belt (12) is 0.20 mm or greater, and not greater than 0.40 mm.

2. The tire (2) according to claim 1, wherein
the rubber composition of the band (14) contains a rubber component, and
an amount of a polyisoprene-based rubber in 100% by weight of the rubber component is 30 to 100% by weight.

3. The tire (2) according to claim 1 or 2, wherein
the rubber composition of the belt (12) contains a rubber component, and
an amount of a polyisoprene-based rubber in 100% by weight of the rubber component is 30 to 100% by weight.

## Patentansprüche

1. Reifen (2), umfassend ein Band (14) und einen Gürtel (12), wobei
das Band (14) außerhalb des Gürtels (12) in einer Radialrichtung des Reifens (2) geschichtet ist,
der Gürtel (12) zwei oder mehr Schichten (24, 26) umfasst, die in der Radialrichtung des Reifens geschichtet sind,
das Band (14) eine Kautschukzusammensetzung und einen Polyesterkord (30) umfasst, der durch Verzwirnen einer Mehrzahl an Filamentgarnen gebildet ist,
jede der zwei oder mehr Schichten (24, 26) des Gürtels (12) eine Kautschukzusammensetzung und einen Kord (34, 36) umfasst, **dadurch gekennzeichnet, dass**
ein Maß (L) zwischen den Korden (34, 36) zweier benachbarter Schichten (24, 26) in dem Gürtel (12) 0,20 mm oder größer, und nicht größer als 0,40 mm, ist.

2. Reifen (2) nach Anspruch 1, wobei
die Kautschukzusammensetzung des Bands (14) eine Kautschukkomponente enthält, und
eine Menge eines Polyisopren-basierten Kautschuks in 100 Gewichts-% der Kautschukkomponente 30 bis 100 Gewichts-% beträgt.

3. Reifen (2) nach Anspruch 1 oder 2, wobei
die Kautschukzusammensetzung des Gürtels (12) eine Kautschukkomponente enthält, und
eine Menge eines Polyisopren-basierten Kautschuks in 100 Gewichts-% der Kautschukkomponente 30 bis 100 Gewichts-% beträgt.

## Revendications

1. Pneumatique (2) comprenant une bande (14) et une ceinture (12), dans lequel
la bande (14) est disposée à l'extérieur de la ceinture (12) dans une direction radiale du pneumatique (2),
la ceinture (12) inclut deux ou plusieurs couches (24, 26) disposées dans la direction radiale du pneumatique,
la bande (14) inclut une composition de caoutchouc et un fil câblé en polyester (30) formé par torsion d'une pluralité de fils continus,
chacune des deux ou plusieurs couches (24, 26) de la ceinture (12) inclut une composition de caoutchouc et un fil câblé (34, 36),
**caractérisé en ce que**
une jauge (L) entre les fils câblés (34, 36) de deux couches adjacentes (24, 26) dans la ceinture (12) est de 0,20 mm ou plus et n'est pas supérieure à 0,40 mm.

2. Pneumatique (2) selon la revendication 1, dans lequel
la composition de caoutchouc de la bande (14) contient un composé de caoutchouc, et
une quantité d'un caoutchouc à base de polyisoprène dans 100 % en poids du composé de caoutchouc est comprise entre 30 et 100 % en poids.

3. Pneumatique (2) selon la revendication 1 ou 2, dans lequel
la composition de caoutchouc de la ceinture (12) contient un composé de caoutchouc, et
une quantité d'un caoutchouc à base de polyisoprène dans 100 % en poids du composé de caoutchouc est comprise entre 30 et 100 % en poids.
